# EUROPÄISCHE PATENTANMELDUNG

(11) **EP 3 270 575 A1**
(43) Veröffentlichungstag der Anmeldung: **17.01.2018**
(21) Anmeldenummer: 16196576.9
(22) Anmeldetag: 31.10.2016
(51) Int. Cl.: H04M 1/60, B60R 25/00, B60R 16/023, G01C 21/36, G07C 5/00

(54) **PLATTFORM ZUR INTEGRATION VON MOBILEN ENDGRÄTEN UND PERIPHEREN GERÄTEN DES NACHRÜSTMARKTES IN EINEM FAHRZEUG**

(30) Priorität: 12.07.2016 DE 102016112744
(71) Anmelder: VEECOO UG, 10243 Berlin (DE); Störmer, Knut, 10243 Berlin (DE)
(72) Erfinder: Störmer, Knut, 10243 Berlin (DE)
(74) Vertreter: Hertin und Partner Rechts- und Patentanwälte PartG mbB

(57) **Zusammenfassung**

Die Erfindung betrifft bevorzugt ein System zur Einbindung von mobilen Endgeräten in einem Fahrzeug umfassend eine Vernetzungsstation und ein Bedienelement, wobei die Vernetzungsstation konfiguriert ist, um empfangene Daten zu verarbeiten, zu bündeln und entsprechend einer vom Nutzer zuvor festgelegten Priorität an die mobilen Endgeräte sowie an ein Audiosystem des Fahrzeuges zur Wiedergabe weiterzuleiten.

## Beschreibung

Die Erfindung betrifft bevorzugt ein System zur Einbindung von mobilen Endgeräten in einem Fahrzeug umfassend eine Vernetzungsstation und ein Bedienelement, wobei die Vernetzungsstation konfiguriert ist, um empfangene Daten zu verarbeiten, zu bündeln und entsprechend einer vom Nutzer zuvor festgelegten Priorität an die mobilen Endgeräte sowie an ein Audiosystem des Fahrzeuges zur Wiedergabe weiterzuleiten.

### STAND DER TECHNIK UND HINTERGRUND

Die Erfindung betrifft das Gebiet der elektronischen Geräte insbesondere Kommunikations- und Informationssysteme zur Ausführung verschiedener Funktionen während des Betreibens eines Kraftfahrzeuges. Es ist bekannt, dass während des Betriebes moderner Kraftfahrzeuge ein Nutzer mit einer Vielzahl von Geräten und verschiedenere Bedienelementen in Verbindung tritt.

Standardmäßig gehört zu einem Kraftfahrzeug eine Audioanlage wie beispielsweise ein Radio mit einem Abspielgerät z.B. einem CD- oder aber auch einem MP3-Player. Weiterhin verfügen moderne Kraftfahrzeuge zumeist über vorinstallierte Navigationsvorrichtungen. Eine Navigationsvorrichtung ist beispielsweise aus der DE 19540864 B4 bekannt. Bei derart bekannten Navigationsvorrichtungen kann anhand einer Positionserfassung mit Hilfe beispielsweise eines GPS-Empfängers Sensors die Position und somit die Route eines Fahrzeuges berechnet werden. Zur Visualisierung der Fahrzeugroute werden zumeist Displays in der Konsole des Fahrzeuges verbaut. Auch können Routenansagen über das Audiosystem des Fahrzeuges an den Nutzer adressiert werden.

Weiterhin ist es bekannt, in Kraftfahrzeugen Multifunktionsbedienvorrichtung einzubauen, um die Steuerung zwischen verschiedenen Bedieneinheiten benutzerfreundlich umzusetzen. In der EP 0701926 B1 wird eine solche Multifunktionsbedienvorrichtung beschrieben. Neben der Bedienung von Navigationssystemen können Multifunktionsbedienvorrichtungen auch zur Steuerung des Audiosystems oder zur Bedienung von mit integrierten Freisprechanlagen verbundenen Telefonen verwandt werden.

Wie z.B. in der DE 102006037762 A1 offenbart, ist es auch bekannt, Touchscreens in der Fahrzeugkonsole zu installieren, um die Handhabung von Multimediasystemen während der Fahrt zu erleichtern. Die Möglichkeiten und Verwendungen von Multimediasystemen in Fahrzeugen sind vielfältig und reichen vom Abspielen und Empfangen von Audio- oder Videodateien bis hin zur Übertragung von Radio oder Fernsehen oder der Bereitstellung eines Internetzuganges.

Neben den Multimediasystemen zur Unterstützung oder zur Unterhaltung des Nutzers verfügen moderne Fahrzeuge über eine umfangreiche Elektronik zur Steuerung und Überwachung des eigenen Fahrzeugbetriebes. Elektronische Schaltungen oder Mikroprozessoren, in ihrer Gesamtheit auch als Steuergeräte des Fahrzeuges bezeichnet, nehmen während der Fahrt Daten über den Motor, den Betriebszustand oder andere relevante Bereiche des Kraftfahrzeuges auf. Mit Hilfe von bekannten Bordcomputern kann in einem Display in der Konsole des Fahrzeuges beispielsweise der Durchschnittsverbrauch, die Durchschnittsgeschwindigkeit und die voraussichtliche Reichweite des Kraftfahrzeugs angezeigt werden. Darüber hinaus unterstützen und regulieren Mikroprozessoren im Fahrzeug die Einstellung des Audiosystems, der Fernsprecheinrichtungen oder aber der Heiz- oder Klimaanlagen.

Auch ist es im Stand der Technik bekannt, dass beim Auftreten eines Fehlers in einem Kraftfahrzeug diese Daten als Fehlermeldungen gespeichert werden. Das Auslesen der Fehlerdaten erfolgt in der Regel mit Hilfe von dazu geeigneten Geräten, welche mittlerweile neben den Kraftfahrzeugwerkstätten auch Verbrauchern zur Verfügung stehen.

In einem modernen Kraftfahrzeug werden somit eine Vielzahl von Daten generiert und verwaltet. Es wäre somit wünschenswert, die vom Fahrzeug generierten Daten einem Nutzer auf bedienungsfreundliche Art und Weise zur Verfügung zu stellen. Weiterhin wäre es vorteilhaft eine integrative Vorrichtung bereitzustellen, welche neben der Verwaltung dieser Daten auch eine benutzerfreundliche Handhabung verschiedener Multimediageräte, Navigationssysteme oder Telefonsprechanlagen sowie die Integration mit peripheren Geräten des Nachrüstmarktes erlaubt.

Nachteilig an den bestehenden Systemen aus dem Stand der Technik ist es, dass diese zumeist in dem Kraftfahrzeug vorinstalliert werden, um bestimmte Funktionen auszuüben. Die Installation der speziellen auf die jeweiligen Fahrzeuge angepassten Systeme ist mit hohen Kosten verbunden. Auch ist eine individuelle Anpassung der vorinstallierten Systeme auf Nutzerwünsche nur sehr begrenzt möglich. Die Installation von Verbesserungen oder Weiterentwicklungen der bekannten Systeme können zumeist nur durch den Hersteller, nicht aber durch den Nutzer selbst, vorgenommen werden.

### AUFGABE DER ERFINDUNG

Eine Aufgabe der Erfindung war es die Nachteile des Standes der Technik zu beseitigen und ein System bereitzustellen, welches das Anzeigen von Fahrzeugdaten sowie die Bedienung verschiedenster Geräte zur Unterstützung und Unterhaltung des Fahrers auf nutzerfreundliche Art erlaubt und mit einem geringem Kostenaufwand verbunden ist.

Die Aufgabe wird durch die unabhängigen Patentansprüche gelöst. Die abhängigen Patentansprüche stellen bevorzugte Ausführungsformen der Erfindung dar.

### ZUSAMMENFASSUNG DER ERFINDUNG

Die Erfindung betrifft bevorzugt ein System zur Einbindung von mobilen Endgeräten in einem Fahrzeug umfassend eine Vernetzungsstation und ein Bedienelement, welches dadurch gekennzeichnet ist, dass die Vernetzungsstation mindestens eine Schnittstelle zur drahtlosen Kommunikation und zum Austausch von Daten für mindestens zwei mobile Endgeräte, mindestens eine Schnittstelle zur drahtlosen Kommunikation und zum Empfangen von Daten von dem Bedienelement, mindestens eine Schnittstelle zur drahtlosen Kommunikation und zum Empfangen von Daten peripherer Geräte des Nachrüstmarkts und mindestens eine Schnittstelle zur Kommunikation und zum Senden von Audiosignalen an ein Audiosystem des Fahrzeuges aufweist, wobei die Vernetzungsstation einen Prozessor umfasst, welcher konfiguriert ist, um empfangene Daten der mobilen Endgeräte, Daten des Bedienelements und Daten peripherer Geräte des Nachrüstmarkts zu verarbeiten, zu bündeln und entsprechend einer vom Nutzer zuvor festgelegten Priorität an die mobilen Endgeräte und/oder an das Bedienelement zu senden, sodass auf den mobilen Endgeräten die Daten peripherer Geräte des Nachrüstmarkts angezeigt werden können, die Audiosignale, welche auf einem der mobilen Endgeräte erzeugt werden, durch das Audiosystems wiedergegeben werden können und mindestens eine Funktion der mobilen Endgeräte mit Hilfe des Bedienelements gesteuert werden kann.

Es ist bekannt, dass mobile Endgeräte des heutigen Standards ein umfangreiches Repertoire an Funktionen und Bedienelementen zur Verfügung stellen können. Im Sinne der Erfindung werden unter mobilen Endgeräten Geräte verstanden, welche bevorzugt aufgrund ihrer Größe oder ihres Gewichtes leicht transportiert und somit mobil einsetzbar sind. Aufgrund integrierter Prozessoren verfügen mobile Endgeräte im vorliegenden Sinne zudem bevorzugt über eine Vielzahl von erweiterten Funktionen wie die Wiedergabe von elektronischen Medien, eine Nutzungsmöglichkeit von Telekommunikationsdiensten oder auch eine Bereitstellung einer ortsabhängigen Positionierung für ein Navigationssystem. Insbesondere werden unter den mobilen Endgeräten Smartphones wie z.B. iPhones, Samsung Galaxys etc. verstanden. Diese Geräte erlauben neben den Kommunikationsmöglichkeiten von Mobilfunktelefonen eine Vielzahl von umfangreichen Computer- und multimedialen Funktionalitäten wie u.a. das Abspielen von Musik, Videos oder den Zugang zum Internet. Auch sind auf Smartphones standardmäßig Navigationssysteme vorinstalliert oder können durch den Nutzer auf einfache Weise installiert werden. Weitere bevorzugte mobile Endgeräte im Sinne der Erfindung sind Tablet-PCs, Notebooks oder Smartwatches.

Eine Motivation der Erfindung ist es die genannten Funktionalitäten der mobilen Endgeräte als Datenverarbeitungs-, Kommunikations-, Informations- oder Multimediageräte während des Betriebes von Kraftfahrzeugen einzusetzen. Im Sinne der Erfindung sind Kraftfahrzeuge bevorzugt mit Hilfe von Motoren angetriebene Fahrzeuge, worunter besonders bevorzugt Automobile oder Lastkraftwagen zu verstehen sind. Nachfolgend sind mit dem Begriff Fahrzeug bevorzugt oben genannte Kraftfahrzeuge gemeint. Anstatt spezielle Navigations- oder Multimediasysteme in den Fahrzeugen zu installieren, erlaubt das erfindungsgemäße System auf besonders einfache Art und Weise durch Einbindung von mobilen Endgeräten derartige Funktionen bereitzustellen.

Zu diesem Zweck umfasst das System eine Vernetzungsstation. Eine Vernetzungsstation bezeichnet im Sinne der Erfindung eine Vorrichtung, welche eine oder mehrere Schnittstellen umfasst zum Datenaustausch mit anderen elektronischen Geräten wie beispielsweise den mobilen Endgeräten, der Fahrzeugelektronik oder aber peripheren Geräten des Nachrüstmarkts. Der Datenaustausch über die Schnittstelle erfolgt bevorzugt mit Hilfe einer drahtlosen Kommunikation. Vorteilhafterweise kann hierdurch der Installationsaufwand reduziert werden. Der Datenaustausch kann aber auch mit Hilfe von Verkabelungen, d.h. verdrahtet, realisiert werden. Dem Fachmann ist es bekannt, welche drahtlosen Kommunikationsmittel oder Kabel bevorzugt zum Anschließen der elektronischen Geräte oder der Fahrzeugelektronik geeignet sind und wie eine Schnittstelle der Vernetzungsstation zu konstruieren ist, um den Datenaustausch zu ermöglichen.

Für die drahtlose Kommunikation können beispielsweise WLAN, Bluetooth oder andere Kommunikationsprotokolle verwandt werden. Die Schnittstellen der Vernetzungsstation verfügen entsprechend bevorzugt über eine Empfänger- und Sendereinheit, welche den drahtlosen Austausch über diese Kommunikationsprotokolle ermöglichen. Eine drahtlose Kommunikation ist besonders bevorzugt für die Einbindung der mobilen Endgeräte. Vorteilhafterweise können bei Einsatz einer drahtlosen Kommunikation die mobilen Endgeräte an beliebigen Positionen beispielsweise in einer Halterung im Fahrzeug installiert werden, sodass ein Nutzer die Geräte individuell entsprechend seiner Präferenzen im Fahrerraum anordnen kann. Es kann aber beispielsweise auch bevorzugt sein, dass der Nutzer das mobile Endgerät in seiner Tasche behält.

Weiterhin kann jedoch auch eine drahtbehaftete Kommunikation insbesondere mit dem Audiosystem bevorzugt umgesetzt werden. Zu diesem Zweck kommen bevorzugt aus dem Stand der Technik bekannte Audiokabel zum Einsatz. Diese erlauben eine besonders störungsfreie Übertragung an das Audiosystem. Der Fachmann weiß wiederum, wie eine Schnittstelle in der Vernetzungsstation für eine derartige Kommunikation mit dem Audiosystem ausgestaltet werden sollte. So entsprechen die Schnittstellen für das Audiosystem bevorzugt den Eingangs- und Ausgangsbuchsen für die Audiosignale.

Zudem umfasst die Vernetzungsstation bevorzugt eine Schnittstelle zum Empfangen von Daten peripherer Geräte des Nachrüstmarktes. Im Sinne der Erfindung bezeichnen "periphere Geräte des Nachrüstmarktes" bevorzugt Geräte, welche nicht serienmäßig in Fahrzeugen des Standes der Technik eingebaut werden, sondern vom Benutzer selbst nachgerüstet werden. Vorteilhafterweise kann durch die Bereitstellung der bevorzugten Schnittstelle die Vernetzungsstation als eine Plattform für die Integration einer Vielzahl von peripheren Geräten des Nachrüstmarktes genutzt werden. Beispiele für periphere Geräte des Nachrüstmarktes im Sinne der Erfindung sind u.a. Reifendrucksensoren, Innen- wie auch Außenkameras, OBD-Schnittstellen, Head-up Displays, Ultraschallsensoren insbesondere zur Einparkhilfe, Regensensoren, Temperatursensoren, GPS-Empfänger, Alarmanlagen, Radarsensoren, insbesondere zur dynamischen Distanzregelung oder Warnung vor Objekten im sogenannten toten Winkel, Standheizungen, Beleuchtungsmodulen wie z.B. Coming Home-/Leaving-Home Module, Unterflurbeleuchtung und ähnlichen Geräte.

Zu den bevorzugten peripheren Geräten des Nachrüstmarktes gehört eine Schnittstelle für das Auslesen von On-Board-Diagnose (OBD)-Daten. Eine integrierte Diagnose gehört bei modernen Kraftfahrzeugen zum Standardrepertoire der elektronischen Motorsteuerungssysteme. So werden Ein- und Ausgangssignale sowie die Kommunikation der Steuergeräte zum Betrieb des Fahrzeuges bevorzugt untereinander überwacht. Unter einer On-Board Diagnose des elektronischen Systems wird bevorzugt die Fähigkeit verstanden sich selbst zu überwachen, d.h. Fehler zu erkennen, abzuspeichern und diagnostisch auszuwerten. Die On-Board Diagnose läuft bevorzugt in dem Fahrzeug ohne Zusatzgeräte ab. Überwachungsalgorithmen überprüfen bevorzugt während des Betriebs des Fahrzeuges die Eingangs- und Ausgangssignale sowie das Gesamtsystem mit allen Funktionen auf Fehlverhalten und Störungen. Dabei werden festgestellte Fehler im Fehlerspeicher des Steuergeräts abgespeichert. Die abgespeicherte Fehlerinformationen, Echtzeitdaten und viele andere Parameter können bevorzugt über eine Diagnoseschnittstelle des Fahrzeugs ausgelesen werden. Die Diagnoseschnittstelle im Fahrzeug ist bevorzugt eine im Stand der Technik bekannte OBD oder OBD-II Schnittstelle. Im Sinne der Erfindung können aber auch funktionssynonyme Schnittstellen gemeint sein, welche andere ggf. weiterentwickelte Kommunikationsprotokolle nutzen.

Es kann bevorzugt sein, dass das System einen Diagnosestecker integriert, welcher an der OBD oder OBD II Schnittstelle des Fahrzeuges installiert vorliegt und mit der Vernetzungsstation über die Schnittstelle zum Empfangen von OBD-Daten verbunden ist. Beispielsweise kann eine Übertragung der OBD-Daten an die Vernetzungsstation durch einen Diagnosestecker mit einem USB-Kabel oder drahtlos zum Anschluss an die Vernetzungsstation erfolgen. Der Fachmann weiß jedoch, dass auch andere Schnittstellen und Kommunikationsverbindungen - beispielsweise drahtlose Kommunikationsmittel - zum Empfangen von OBD-Daten an der Vernetzungsstation geeignet sein können.

Bevorzugte OBD-Daten umfassen Daten über den Kilometerstand, den Tankinhalt, die Reichweite, den Durchschnittsverbrauch, den Öldruck, die Öltemperatur, den Kühlmittelstand, die Kühlmitteltemperatur, den Betriebszustand der Lambdasonde, den Zustand des Motors und/oder Fehlermeldungen.

Die Kombination der verschiedenen Schnittstellen zur Anbindung der mobilen Endgeräte, der Fahrzeugelektronik und des Audiosystem erlauben den Aufbau eines Netzwerkes und den gebündelten Datenaustauschen zwischen verschiedenen elektronischen Geräten, welche im Fahrzeugbetrieb zum Einsatz kommen.

Die Vernetzungsstation kann daher im Sinne der Erfindung auch als ein "Car Connectivity Hub" bezeichnet werden, welches insbesondere eine sogenannte "Smartbox" darstellt. Die Bezeichnung "smart" bezieht sich bevorzugt darauf, dass die Vernetzungsstation nicht nur eine Verbindung der Geräte und somit einen Datenaustausch zwischen diesen erlaubt, sondern dass die Vernetzungsstation zudem die Daten ordnen, bündeln und priorisieren kann. Zu diesem Zweck umfasst die Vernetzungsstation bevorzugt einen Prozessor, welcher zur Aufnahme, zur Verarbeitung und zur Weiterleitung der empfangenen Daten geeignet ist.

Das erfindungsgemäße System erlaubt somit eine besonders einfache und effektive Einbindung verschiedenster elektronischer Geräte im Fahrzeug wie den mobilen Endgeräten oder dem Audiosystem bis hin zur Fahrzeugelektronik zum Empfangen Daten peripherer Geräte des Nachrüstmarktes, bevorzugt von OBD-Daten, oder anderen Sensordaten. Durch die Möglichkeit zur Verarbeitung der Daten kann eine zentrale Bündelung der relevanten Datenströme erfolgen, welche während der Fahrt generiert werden.

Im Stand der Technik werden oftmals separate Systeme verwandt, welche einzeln angesteuert und separat bedient werden, so dass keine Bündelung der Datenströme erfolgt. Die durch die Vernetzungsstation erreichbare Bündelung und Auswertung der Datenströme erlaubt demgegenüber eine Reihe von Vorteilen.

So können entsprechend einer vom Nutzer festgelegten Priorität Daten ausgewertet und weitergeleitet werden. Durch ein individuell erstellbares Nutzerprofil kann z.B. festgelegt werden, wie und welche Daten an den mobilen Endgeräten angezeigt werden sollen. Beispielsweise kann der Nutzer festlegen, dass bestimmte OBD-Daten wie z.B. des Betriebszustandes von Motorkomponenten (wie Ölstand oder der Verbrauch) im optischen Display der mobilen Endgeräte angezeigt werden. Die Anzeige kann dabei auch dynamisch erfolgen. Durch die Möglichkeit der optischen oder akustischen Aufbereitung der Information mit Hilfe der mobilen Endgeräte wird eine besonders sichere und fahrerfreundliche Kommunikationsanzeige erreicht.

Weiterhin können durch die Vernetzungsstation vielfältige Funktionalitäten der mobilen Endgeräte während des Fahrbetriebes auf einfache und fahrsichere Weise zugänglich gemacht werden. Beispielsweise kann ein Freisprechen, ein Musikstreaming oder auch die Übertragung von Navigationshinweisen durch das mobile Endgerät erfolgen. Diese Daten können dabei wiederum an das Audiosystem geleitet werden, wobei eine Priorisierung der Datenströmen oder Signale erfolgen kann. Dabei kann es vom Nutzer gewünscht sein, dass eine Navigationsansage über das Abspielen von Musik gelegt wird, sodass sichergestellt wird, dass wichtige Navigationsansagen nicht im Geräuschpegel untergehen. Auch kann es bevorzugt sein, dass bestimmte Warnungen oder Fehlermeldungen mit erhöhter Priorität an das mobile Endgerät oder aber an das Audiosystem geleitet werden.

Im Stand der Technik gibt es zur Anzeige von Fehlermeldungen Warnlampen in Kraftfahrzeugen. Für den durchschnittlichen Kraftfahrzeugnutzer ist es oftmals nicht ersichtlich, welche Bedeutung den Warnlampen zukommt. Anstatt somit im Stand der Technik lediglich eine aufleuchtende Warnlampe für den Öldruck anzuzeigen, können mit Hilfe des Systems dem Fahrer detaillierte Informationen zum Fehler bereitgestellt werden. Beispielsweise kann eine Audioansage den Fehler erläutern und auch eine Handlungsempfehlung, wie z.B. das direkte Aufsuchen einer Werkstatt, beinhalten. Durch den Internetzugang der mobilen Endgeräte kann dies vorzugsweise begleitet werden durch das Anzeigen der Wegstrecke zur nächstgelegenen Werkstatt.

Diese Einbindung von Fahrzeugdaten in die Vernetzungsstation erlaubt somit eine effektive Nutzung derselben während der Fahrt, wobei diese durch die Funktionalitäten insbesondere der mobilen Endgeräte für den Fahrer aufbereitet werden können. Die erfindungsgemäße Vernetzungsstation verschafft somit synergistische Effekte zwischen den eingebundenen Geräte und der Fahrzeugelektronik, welche über die Nutzbarkeit der einzelnen Komponenten hinausgeht. Hierdurch können sowohl ein sicherer Betrieb des Fahrzeuges, als auch aufwändige und kostenintensive Reparaturen vermieden werden.

Ein besonderer Vorteil des erfindungsgemäßen Systems ist zudem, dass der Fahrer auf die vertraute Bedienoberfläche der mobilen Endgeräte zurückgreifen kann. Somit muss sich ein Fahrer nicht erst auf unterschiedliche vorinstallierte Multifunktionsbediengeräte einstellen. Stattdessen kann er auch die Fahrzeugdaten oder das Audiosystem bequem mit Hilfe der bekannten Funktionalitäten auf seinem mobilen Endgerät steuern. Dies kann besonders vorteilhaft beispielsweise für Autovermietungen oder Car-Sharing-Netzwerke eingesetzt werden. Bei der Automietung ist der Fahrer in der Regel nicht mit dem Aufbau der Bediengeräte des jeweiligen Autotyps vertraut. Unter Nutzung des erfindungsgemäßen System ist dies vorteilhafterweise auch nicht mehr notwendig, da er beispielsweise sein eigenes Smartphone einbinden kann.

Ein weiterer besonderer Vorteil des Systems besteht darin, dass dieses nur einen minimalen Installationsaufwand erfordert. Somit kann das System auf einfache Weise nachträglich in ein Fahrzeug eingebaut werden und auch für unterschiedliche Fahrzeuge genutzt werden. Zudem kann das System vorteilhafterweise an der dynamischen Weiterentwicklung im Bereich mobiler Endgeräte, wie beispielsweise den Smartphones, partizipieren. Bevorzugt kann der Nutzer selbst durch die Installation von Updates neue Funktionalitäten weiterentwickelter Smartphones diese auch für den Fahrzeugbetrieb nutzbar machen.

Ein weiterer Vorteil des erfindungsgemäßen Systems ergibt sich durch die Einbindbarkeit von mindestens zwei, bevorzugt mindestens drei mobilen Endgeräten. Hierdurch kann ein Nutzer z.B. auch ein privates Smartphone und ein dienstliches Smartphone bequem anschließen. Beispielsweise kann der Nutzer dadurch private Musik über das Audiosystem abspielen lassen, während er mit einer Freisprechanlage über das dienstliche Smartphone Telefongespräche entgegennehmen kann. Ferner kann der Nutzer mit einem Tablet-PC navigieren während er sowohl auf seinem privaten wie auch dienstlichen Smartphone erreichbar ist.

Während die Bedienfunktionen mit Hilfe der mobilen Endgeräte beispielsweise mit Hilfe eines Touchscreens auf dem Smartphone eine gewohnte Nutzung erlauben, kann es vorteilhaft sein, ein auf die Fahrsituation angepasstes Bedienelement bereitzustellen.

Das erfindungsgemäße System umfasst daher bevorzugt ein Bedienelement, welches mit Hilfe einer Schnittstelle bevorzugt zur drahtlosen Kommunikation mit der Vernetzungsstation verbunden ist. Das Bedienelement, welches auch als "controller" bezeichnet werden kann, umfasst bevorzugt eine einfache Knopf- oder Tasten-Bedienoberfläche. So kann das Bedienelement einen Druckknopf oder einen Drehknopf für die Annahme oder das Ablehnen von Telefonaten, für das Einstellen der Lautstärke des Audiosystems, das Überspringen eines Tracks etc. umfassen. Durch eine kompakte Anordnung der Eingabeelemente mit auswählbaren, spezifischen Funktionen lässt sich eine besonders sichere Bedienung auf dem Bedienelement realisieren. Hierdurch können oftmals ausgeführte Aktionen besonders zuverlässig und sicher vom Fahrer während der Fahrt vorgenommen werden.

In einer besonders bevorzugten Ausführungsform der Erfindung weist das Bedienelement ein Mikrofon auf, sodass das Bedienelement zur Freisprechfunktion und/oder zur Sprachsteuerung genutzt werden kann. Eine Freisprechfunktion bezeichnet im Sinne der Erfindung bevorzugt eine Funktionalität des erfindungsgemäßen Systems wodurch der Fahrer in die Lage versetzt wird, durch das Sprechen in ein Mikrofon mit einem Gesprächspartner über ein Mobiltelefon zu kommunizieren, ohne dieses in die Hand zu nehmen. In der bevorzugten Ausführungsform umfasst das Bedienelement dieses Mikrofon und leitet bevorzugt die Audiodaten über die Vernetzungsstation an ein mobiles Endgerät weiter, welches die Signale an den Gesprächspartner sendet. Die am mobilen Endgerät eingehenden Audiosignale werden bevorzugt an die Vernetzungsstation gesandt und durch diese an das Audiosystem übermittelt. Durch die Nutzung des Bedienelementes mit einem integrierten Mikrofon kann eine Freisprechanlage besonders kostengünstig in das System integriert werden. Weiterhin erlaubt die Integration des Mikrofons in dem Bedienelement eine besonders klare Aufzeichnung der Stimme und somit eine ausgezeichnete Gesprächsqualität. Zudem kann durch eine Priorisierung der Audiosignale eine besonders fahrsichere Freisprechanalage umgesetzt werden. So können Daten, welche für die Fahrzeugführung wichtig sind, wie z.B. Navigationsbefehle oder Warnsignale auf Basis der OBD-Daten über die Audiosignale des Telefongespräches gelegt werden.

Weiterhin lässt sich das System durch die Einbindung eines Mikrofons in das Bedienelement besonders präzise für eine Sprachsteuerung der elektronischen Geräte nutzen. Im Sinne der Erfindung wird unter der Sprachsteuerung bevorzugt die Steuerung der elektronischen Geräte mithilfe von Sprachbefehlen verstanden, also eine Bedienung der Geräte auf Basis einer automatisierten Spracherkennung der menschlichen Stimme, insbesondere der Stimme des Fahrers. Sprachsteuerungen sind im Stand der Technik hinreichend bekannt. Beispielsweise wird in der DE 19533541 C1 eine Sprachsteuerung zur automatischen Steuerung eines oder mehrerer Geräte mithilfe von Sprachkommandos per Sprachdialog in einem Echtzeitbetrieb beschrieben. Es ist bekannt, dass zur Sprachsteuerung bevorzugt ein Prozessor eine Spracherkennung durchführt, d.h. bevorzugt eine Analyse der verbalen Sprachbefehle und deren Zuordnung zu Handlungsbefehlen, insbesondere zur Ausführung von Funktionen an einem Gerät. Die Spracherkennung kann für die bevorzugte Ausführungsform des erfindungsgemäßen Systems mithilfe der mobilen Endgeräte durchgeführt werden. Zu diesem Zweck wird der aufgenommene Sprachbefehl vom Bedienelement über die Vernetzungsstation an die mobilen Endgeräte gesandt. Auf dem mobilen Endgerät liegt bevorzugt eine Spracherkennungssoftware vor. Es kann auch bevorzugt sein, dass wie z.B. im Falle der Softwareanwendung Siri des iPhone die Spracherkennung extern ausgelagert ist. In dem Fall können die Sprachdaten an einen externen Server gesandt werden, welcher Handlungs- oder Softwarebefehle zurücksendet. Auf Basis der ausgewerteten Sprachbefehle kann es bevorzugt sein, dass das mobile Endgerät die entsprechenden Daten an die Vernetzungsstation sendet. In Abhängigkeit der Nutzereinstellung können die Sprachbefehle dann weiterverarbeitet werden, um beispielsweise Einstellungen am Audiosystem vorzunehmen wie die Anwahl eines Musiktitels oder die Regulation der Lautstärke. Auch können Funktionalitäten auf dem mobilen Endgerät selbst angesteuert werden beispielsweise zur Anwahl eines E-Mail-Programmes und des Vorlesens einer Mail. Die Sprachsteuerung mithilfe des Bedienelements erlaubt eine besonders sichere Bedienung und Nutzung der vernetzten elektronischen Geräte. Vorteilhafterweise kann der Fahrer hierdurch seine ungeteilte Aufmerksamkeit auf den Verkehr richten und ohne den Blick von der Straße zu wenden mit Hilfe von Sprachbefehlen das System steuern.

In einer bevorzugten Ausführungsform der Erfindung ist das System dadurch gekennzeichnet, dass die Sprachsteuerung zur Bedienung eines mobilen Endgerätes genutzt werden kann ohne dieses direkt bedienen zu müssen. Die Bedienung der mobilen Endgeräte stellen zentrale und oft genutzte Funktionen dar. Die Möglichkeit der Sprachsteuerung dieser im Verkehr oftmals bedienten Geräte trägt daher in besonderem Maße dazu bei den Straßenverkehr sicherer zu gestalten und Unfallrisiken auf Grund von Ablenkungen zu reduzieren.

Des Weiteren lassen sich für die Bedienung der Geräte die Sprachbefehle klar eingrenzen, um eine Spracherkennung auf die jeweilige Bedienung der elektronischen Geräte zu optimieren. Es kann beispielsweise bevorzugt sein, dass die Sprachsteuerung zum Anwählen eines Kontaktes aus dem Telefonbuch eines Smartphones genutzt wird. In dem Fall kann nach einer Erkennung, dass es sich um die Anwahl eines Kontaktes handelt, mit hoher Präzision eine Zuordnung zu einer Person aus der begrenzten Kontaktmenge erfolgen. Weiterhin können mit Hilfe der Sprachsteuerung des mobilen Endgerätes, wie einem Smartphone, vorteilhafterweise auch Informationen aus dem Internet auf einfache und sichere Weise von einem Fahrer abgerufen werden. Beispielsweise kann der Fahrer sich mittels Sprachsteuerung Restaurants oder Einkaufsmöglichkeiten in der Nähe des Fahrzeuges anzeigen lassen. Durch eine Anbindung an die Vernetzungsstation kann weiterhin durch den Austausch der Daten, beispielsweise der OBD-Daten, auch Betriebszustände recherchiert werden, um diese noch während der Fahrt mit Normwerten zu vergleichen.

In einer bevorzugten Ausführungsform der Erfindung ist das System dadurch gekennzeichnet, dass auf einem mobilen Endgerät eine Navigationsanwendung installiert vorliegt. Durch das Vorliegen einer Navigationsanwendung auf dem mobilen Endgerät ist es vorteilhafterweise möglich mithilfe des erfindungsmäßen Systems auf besonders günstige Weise ein zuverlässiges Navigationssystem für Kraftfahrzeuge bereitzustellen. Anstatt einer kostenintensiven Installation eines speziellen Navigationssystems durch den Hersteller kann in dem Fahrzeug eine bereits auf einem Smartphone vorinstallierte Navigationsanwendung zur Anwendung kommen. Als beispielhafte Anwendungen seien google maps, TomTom oder iMaps genannt.

Darüber hinaus lassen sich für die Navigationsanwendungen weitere Zusatzinformationen besonders einfach einbinden. So können mithilfe des Navigationssystems eines Smartphones beispielsweise gezielt Restaurants angesteuert werden, wobei zuvor das System genutzt werden kann, um Erfahrungsberichte der Besucher zu sortieren, anzuzeigen oder über das Audiosystem abzuspielen. Wie das Beispiel zeigt, können aufgrund der Vernetzung der elektronischen Geräte deren Funktionen synergistisch genutzt werden, wodurch ein weites Anwendungsfeld eröffnet wird.

In einer bevorzugten Ausführungsform der Erfindung ist das System dadurch gekennzeichnet, dass eine Wiedergabe der Audiosignale gemäß ihrer Wichtigkeit für die Fahrzeugführung priorisiert wird, sodass bevorzugt die Wiedergabe von Audiosignalen einer Navigationsanwendung über die Wiedergabe von Audiosignalen eines Telefonates und/oder Musik priorisiert wird.

Durch die Priorisierung der Audiosignale gemäß ihrer Wichtigkeit für die Fahrzeugführung wird die Fahrsicherheit erhöht. Im Stand der Technik kann eine unabhängige und separate Generation von Audiosignalen verschiedener Geräte vom Fahrgeschehen ablenken. So kann es dazu kommen, dass beispielsweise im Hintergrund ein Radio läuft, während bei einem ersten Smartphone unter Klingeln ein Anruf eingeht und gleichzeitig von einem zweiten Smartphone ein Navigationsbefehl erfolgt. Aufgrund dieser Überlagerung der Audiosignale wird die Aufmerksamkeit des Fahrers gemindert und der Navigationsbefehl kann in dem Geräuschpegel untergehen.

Es kann bevorzugt sein, dass der Fahrer durch eine individuelle Konfiguration des Systems festlegt, welche Audiosignale mit welcher Priorität behandelt werden. Besonders bevorzugt werden jedoch diejenigen Audiosignale, welche mittelbar oder unmittelbar mit der Fahrzeugführung verbunden sind priorisiert. So haben Audiosignale einer Navigationsanwendung oder aber Warnsignale auf Basis der Auswertung der OBD-Daten wie z.B. eines niedrigen Kühlmittelstandes eine höhere Priorität, als beispielsweise die Audiosignale eines Telefongespräches oder abgespielter Musik.

Die Bündelung und Priorisierung der Daten verdeutlicht die besonderen Vorteile des erfindungsgemäßen Systems. Während es durchaus möglich ist einzelne Funktionen durch die separate Nutzung von mobilen Endgeräten, Audiosystem oder anderen elektronischen Geräten im Fahrzeug umzusetzen, ist eine gebündelte Auswertung und nach individuellen Kriterien gewichtete Anzeige der Daten erst durch eine Vernetzung mit Hilfe des erfindungsgemäßen Systems möglich.

In einer bevorzugten Ausführungsform der Erfindung ist das System dadurch gekennzeichnet, dass die Vernetzungsstation mindestens eine Schnittstelle zur drahtlosen Kommunikation und zum Austausch von Daten mit mindestens einer im oder am Fahrzeug installierten Kamera aufweist. Eine solche Schnittstelle kann beispielsweise mithilfe von WLAN oder Bluetooth realisiert werden. Es kann bevorzugt sein Kameras zu nutzen, welche bereits in dem Fahrzeug vom Hersteller vorinstalliert wurden. Vorteilhafterweise können aber günstig erwerbbare Kameras im Fahrzeug nachinstalliert werden und durch das erfindungsgemäße System angesteuert werden. Das bevorzugte System eignet sich somit auch zur Bündelung und Anzeige von visuellen Daten vom Innenraum oder Außenraum des Fahrzeuges.

In einer bevorzugten Ausführungsform der Erfindung ist das System dadurch gekennzeichnet, dass die Vernetzungsstation die von der mindestens einen Kamera empfangenen Daten zur Anzeige an die mobilen Endgeräte weitersenden kann. Die visuellen Daten werden bevorzugt mit Hilfe der jeweiligen Schnittstellen der Vernetzungsstation von der Kamera an das mobile Endgerät gesandt. Bevorzugt kann durch den Prozessor zudem eine Priorisierung oder Selektion der Daten erfolgen. Beispielsweise kann bei der Einbindung mehrerer Kameras der Nutzer durch Priorisierung in den Nutzereinstellungen bevorzugt auswählen, welche Bilder von welcher Kamera in einem Display des mobilen Endgerätes angezeigt werden sollen. Hierdurch ist eine besonders einfache Überwachung von Fahrzeugbereichen im Innen- oder Außenraum möglich. Durch einen kurzen Blick auf das Display seines eingebunden Smartphones kann der Fahrer beispielsweise sehen, ob die Kinder auf dem Rücksitz schlafen oder er beim Rückwärtseinparken auf einen verdeckten Pfeiler achten sollte.

In einer bevorzugten Ausführungsform der Erfindung ist das System dadurch gekennzeichnet, dass die mindestens eine Kamera ausgewählt ist aus einer Gruppe umfassend Rückfahrkamera, Frontkamera, Innenraumkamera und/oder Babykamera. Vorteilhafterweise kann das erfindungsgemäße System durch Verwendung dieser verschiedenen Kameras eine umfassende Visualisierung des Fahrzeuginnenraumes und -außenraumes auf sehr kostengünstige Weise realisieren.

Eine Rückfahrkamera ist bevorzugt am Heck des Kraftfahrzeuges angebracht und kann bevorzugt beim Rückwärtseinparken Hindernisse frühzeitig anzeigen. Es ist bevorzugt, dass die Rückfahrkamera von der Rückfahrlampe mit Strom versorgt wird, sodass diese nur beim Einlegen eines Rückwärtsganges aufnimmt. Bevorzugt werden die Videodaten der Rückfahrkamera nur beim Einlegen des Rückwärtsganges im Display der mobilen Endgeräte angezeigt. Die Frontkamera erlaubt bevorzugt das Fahrzeuggeschehen aus der Fahrerperspektive aufzuzeichnen. Beispielsweise kann das System derart eingestellt werden, dass automatisch bei starkem Abbremsen (detektierbar anhand einer abnehmenden Geschwindigkeit durch die Fahrzeugelektronik) Aufnahmen der Frontkamera durch ein mobiles Endgerät aufgezeichnet werden. Dies kann z.B. zum Nachvollziehen eines Unfallvorgangs eingesetzt werden. Eine Innenraumkamera, insbesondere eine Babykamera kann vorteilhafterweise eingesetzt werden, um für den Fahrer Bereiche des Innenraumes sichtbar zu machen, welche er mit Hilfe eines Rückspiegels und ohne starke Kopfbewegung nicht einsehen kann. Hierdurch kann beispielsweise während der Fahrt durch einen kurzen Blick auf das mobile Endgerät ein Fahrer feststellen, ob es dem Baby gut geht oder eine Fahrpause eingelegt werden sollte.

In einer weiteren bevorzugten Ausführungsform der Erfindung ist das System dadurch gekennzeichnet, dass die Aufnahmefunktion der Kamera von einem der mobilen Endgeräte steuerbar ist. Zu diesem Zweck kann es bevorzugt sein, auf dem mobilen Endgerät wie dem Smartphone eine Menu-Auswahl der Kameras anzuzeigen. Durch manuelle Bedienung beispielsweise eines Touchscreens kann somit auf einfache Weise durch die Vernetzung mittels des erfindungsgemäßen Systems die Aufnahmefunktion einer Kamera an- oder ausgeschaltet werden. Es ist auch denkbar, dass die Kameras auf einem schwenkbaren Stativ installiert sind. In dem Fall könnte das mobile Endgerät weiterhin genutzt werden, um auf benutzerfreundliche Weise die Blickrichtung der Kamera einzustellen.

In einer bevorzugten Ausführungsform der Erfindung ist das System dadurch gekennzeichnet, dass die drahtlose Kommunikation mit Hilfe von Bluetooth und/oder WLAN erfolgt. Die Kommunikationsprotokolle haben sich als besonders robust, zuverlässig und schnell für den Austausch der Datenströme der angeschlossenen Geräte erwiesen.

In einer bevorzugten Ausführungsform der Erfindung ist das System dadurch gekennzeichnet, dass die Daten der peripheren Geräte des Nachrüstmarktes OBD-Daten sind und diese bevorzugt Daten über den Kilometerstand, den Tankinhalt, die Reichweite, den Durchschnittsverbrauch, den Öldruck, die Öltemperatur, den Kühlmittelstand, die Kühlmitteltemperatur, den Betriebszustand der Lambdasonde, den Zustand des Motors und/oder Fehlermeldungen umfassen. In der bevorzugten Ausführungsform werden dem Fahrer eine Vielzahl von hilfreichen Informationen über den Betriebszustand oder die Performance des Fahrzeuges zur Verfügung gestellt. Da diese Daten durch das erfindungsgemäße System ebenfalls bevorzugt den mobilen Endgeräten bereitgestellt werden, ist es vorteilhafterweise möglich die Informationen aufzubereiten und zu analysieren. Hierdurch kann auf einfache Weise der Fahrer des Fahrzeuges über einen längeren Zeitraum beispielsweise den Durchschnittsverbrauch des Fahrzeuges aufzeichnen und diesen mit anderen Parametern wie beispielsweise der Routenführung korrelieren. Weiterhin können durch die Informationen über den Betriebszustand des Motors, Fehlermeldung besonders schnell und effektiv an den Fahrer weitergeleitet werden. Dies reduziert das Risiko, dass Fehler wie z.B. ein zu niedriger Ölstand, Motorschäden bewirken erheblich. Durch die einfache Einbindung dieser OBD-Daten über den Betriebszustand des Motors kann somit eine besonders sichere, zuverlässige und einfache Überwachung der Fahrzeugfunktionen durchgeführt werden.

In einer weiteren bevorzugten Ausführungsform der Erfindung weist die Vernetzungsstation mindestens eine Schnittstelle zur drahtlosen Kommunikation mit einem Reifendruckkontrollsystem, bevorzugt mit nachgerüsteten Reifendrucksensoren, auf. Reifendruckkontrollsysteme sind im Stand der Technik bekannt und werden im Deutschen durch RDKS abgekürzt. Die englische Bezeichnung *"tire pressure monitoring system"* wird als TPMS abgekürzt. Reifendruckkontrollsysteme dienen der Überwachung des Reifendrucks bei Kraftfahrzeugen. Durch eine Überwachung des Reifendruckes während der Fahrt können nicht nur Unfälle vermieden werden, sondern ein optimal eingestellter Reifendruck kann Kraftstoff einsparen und Reifenverschleiß verringern. Zur Reifendruckkontrolle werden Sensoren eingesetzt, wobei zwischen direkten und indirekten Systemen unterschieden wird. Bei direkt messenden Systemen erfasst ein Drucksensor, bevorzugt ein nachgerüsteter Reifendrucksensor, den Innendruck und die Temperatur der Reifenfüllung eines Reifens Bei indirekten Systemen wird unter Nutzung der Sensorik der fahrzeugeigenen ABS/ESP-System ein Rückschluss auf den Reifendruck anhand der Drehzahlen ermittelt werden. So verringert sich im Falle eines Druckabfalles der Radumfang, wodurch sich die Drehzahl erhöht. Auch können anhand der Messung charakteristischer, druckabhängiger Schwingungen Rückschlüsse auf den Reifendruck gewonnen werden. Es ist besonders bevorzugt, dass die Vernetzungsstation eine Schnittstelle für nachgerüstete Reifendrucksensoren aufweist. Im Sinne der Erfindung bezeichnen die nachgerüstete Reifendrucksensoren bevorzugt jene Sensoren, welche nicht serienmäßig während der Herstellung des Fahrzeuges integriert werden, sondern von einem Benutzer zu einem späteren Zeitpunkt nachinstalliert werden kann. Im Stand der Technik ist eine Vielzahl von nachgerüstete Reifendrucksensoren bekannt. Dem Fachmann ist weiterhin bekannt, welche Schnittstellen an der Vernetzungsstation geeignet sind, um eine Kommunikation mit Reifendruckkontrollsystemen zu ermöglichen und Daten über den Reifendruck zu empfangen. Es ist besonders bevorzugt, dass die Kommunikation, d.h. der Datenaustausch, drahtlos beispielsweise mit Hilfe von Bluetooth oder WLAN erfolgt.

Durch Einbindung der Daten über den Reifendruck in das erfindungsgemäße System können mit Hilfe der mobilen Endgeräte Warnmeldungen optisch oder über das Audiosystem abgegeben werden, um den Fahrer möglichst schnell auf einen Reifendruckabfall hinzuweisen. Aufgrund der individuellen Konfigurationsmöglichkeiten ist es darüber hinaus möglich, dass der Nutzer festlegt, ab welchem Reifendruck bzw. Druckabfall er einen Hinweis erhalten möchte. Dadurch kann das System dazu beitragen einen optimalen Reifendruck zu gewährleisten, sodass die Reifen jederzeit ihre volle Funktionsfähigkeit bewahren, Kraftstoff gespart werden kann und ein Verschleiß der Reifen reduziert wird.

In einer bevorzugten Ausführungsform der Erfindung sind die mobilen Endgeräte ausgewählt aus einer Gruppe umfassend Smartphones, Tablet-PCs, Notebooks und/oder Smartwatches. Die genannten mobilen Endgeräte zeichnen sich durch eine hohe Funktionalität bei geringem Gewicht aus. Vorteilhafterweise lässt sich mit der erfindungsgemäßen Vernetzungsstation eine Vielzahl von unterschiedlichen mobilen Endgeräten einbinden. Ein Nutzer kann bevorzugt neben seinem Smartphone gleichzeitig eine Smartwatch oder auch einen Tablet-PC, wie z.B. ein iPad an die Vernetzungsstation anschließen. Dadurch wird ein effektiver Datenaustausch zwischen den mobilen Endgeräten möglich, wobei eine Bündelung und Priorisierung durch die Vernetzungsstation erfolgen kann. Beispielsweise kann sowohl von einem Smartphone als auch einer Smartwatch oder einem Tablet-PC eine Terminmitteilung als ein akustisches Signal von dem Audiosystem angezeigt werden. Durch Verwendung von der bevorzugten Sprachfunktion können darüber hinaus weitergehende Funktionen der mobilen Endgeräte ausgenutzt werden. Beispielsweise kann sich ein Nutzer auf Basis der Terminmitteilung weitere Informationen aus dem Internet oder dem E-Mail-Programm der jeweiligen Geräte anzeigen lassen.

In einer weiteren bevorzugten Ausführungsform ist das System dadurch gekennzeichnet, dass auf der Vernetzungsstation eine Firmware installiert vorliegt, durch welche eine Koordination der Funktionalität der Vernetzungsstation erfolgt und auf den mobilen Endgeräten eine App installiert vorliegt, durch welche ein Verbindungsaufbau mit der Vernetzungsstation erfolgt sowie eine Konfiguration der Funktionalität der Vernetzungsstation.

Die Gerätesoftware ist bevorzugt auf dem Prozessor der Vernetzungsstation vorinstalliert und stellt bevorzugt die Software zum Betreiben des Systems dar. D.h. es ist bevorzugt nicht vorgesehen die Gerätesoftware direkt durch den Nutzer zu verändern. Stattdessen ist die eingebettet Gerätesoftware bevorzugt besonders robust, um eine zuverlässige Funktionalität des erfindungsgemäßen Systems sicherzustellen.

Die Gerätesoftware erlaubt bevorzugt die Einbindung und den Datenaustausch mit den angeschlossenen Geräten, d.h. bevorzugt mit den mobilen Endgeräten, dem Audiosystem, dem Bedienelement, den Kameras oder der Fahrzeugelektronik zum Empfangen von Daten peripherer Geräte des Nachrüstmarktes, bevorzugt OBD-Daten oder Daten über den Reifendruck. Die Gerätesoftware koordiniert somit bevorzugt die Vernetzung der Geräte, sowie die Bündelung und Priorisierung der Daten beispielsweise der Audiosignale.

Es ist besonders bevorzugt, dass die Konfiguration der Gerätesoftware zur Koordination der Geräte einstellbar ist. Beispielsweise können zu diesem Zweck Nutzereinstellungen auf einem Datenspeicher, z.B. eines Arbeitsspeichers auf der Vernetzungsstation vorliegen und veränderbar sein. Dabei kann die Konfiguration der Gerätesoftware durch eine Software vorgenommen werden, welche auf den mobilen Endgeräten installiert vorliegt. Im Sinne der Erfindung wird diese Software auch als "Mobile App" oder kurz "App" bezeichnet. Bevorzugt koordiniert die App auf den mobilen Endgeräten den Verbindungsaufbau mit der Vernetzungsstation sowie die Funktionalitäten der Vernetzungsstation. So kann die App die Funktionalität der Vernetzungsstation, d.h. die Koordination und Priorisierung der Datenströme, gemäß Voreinstellungen oder individueller Nutzerprofile konfigurieren.

In einer weiteren bevorzugten Ausführungsform der Erfindung umfasst die App eine benutzerspezifische Konfiguration der Datenanzeige und/oder Priorisierung der Datenverarbeitung. Die individuelle Konfiguration der Priorisierung der Datenverarbeitung durch die App wird bevorzugt an die Vernetzungsstation weitergeleitet. Somit kann mit Hilfe der Gerätesoftware die Ansteuerung und der Datenaustausch mit den angeschlossenen Geräten benutzerspezifisch erfolgen. Beispielsweise kann durch eine benutzerspezifische Konfiguration bevorzugt festgelegt werden, welche Audioquellen eine hohe Wichtigkeit haben. D.h. es kann eingestellt werden, ob und mit welcher Priorität Kalendertermine, SMS-Nachrichten, Navigationsbefehle oder eingehende Anrufe und E-Mails an das Audiosystem weitergeleitet werden. Es ist bevorzugt, dass die App automatisiert nach dem Verbindungsaufbau die individuellen Nutzereinstellungen überträgt, sodass eine auf die Bedürfnisse bei Fahrtbeginn angepasste Koordination der Geräte erfolgt. Auch erhöht eine individuell einstellbare Datenanzeige an dem Display der mobilen Endgeräte den Nutzerkomfort des Systems erheblich. Durch die einfache Handhabung kann z.B. im Gegensatz zu standardisierten Bordcomputern eine auf die Wünsche des Nutzers angepasste Anzeige von Fahrzeuginformation oder weiteren Daten wie Kamerabilder, Navigationsrouten etc. erfolgen.

Des Weiteren betrifft die Erfindung bevorzugt ein Computer-implementiertes Verfahren, welches auf dem erfindungsgemäßen Systems oder bevorzugten Ausführungsformen davon durchgeführt wird.

Die Erfindung betrifft somit zudem bevorzugt ein computerimplementiertes Verfahren zur Einbindung von mobilen Endgeräten in einem Fahrzeug umfassend die Bereitstellung der erfindungsgemäßen Vernetzungsstation und des Bedienelementes oder bevorzugten Ausführungsformen davon, wobei der Prozessor Daten der mobilen Endgeräte, Daten des Bedienelementes und Daten von peripheren Geräten des Nachrüstmarkts empfängt, die empfangene Daten verarbeitet sowie bündelt und entsprechend einer vom Nutzer zuvor festgelegten Priorität an die mobilen Endgeräte und/oder an das Bedienelement sendet, sodass auf den mobilen Endgeräten die Daten peripherer Geräten des Nachrüstmarkts angezeigt werden, die Audiosignale, welche auf einem der mobilen Endgeräte erzeugt werden, durch das Audiosystem wiedergegeben werden und mindestens eine Funktion der mobilen Endgeräte mit Hilfe des Bedienelements gesteuert wird.

Der Fachmann erkennt, dass bevorzugte Ausführungsformen und Vorteile, welche für das erfindungsgemäße System offenbart wurden, ebenso für das computerimplementierte Verfahren gelten. Beispielsweise wurde für eine bevorzugte Ausführungsform des Systems offenbart, dass der Prozessor bevorzugt derart konfiguriert ist, dass eine Priorisierung von Audiosignalen, welche für die Fahrzeugführung notwendig sind (z.B. Navigationshinweise) über Audiosignales eines Telefonates oder Musik erfolgen kann. Der Fachmann erkennt, dass im Sinne der Erfindung somit auch das computerimplementierte Verfahren bevorzugt einen Schritt umfasst, welcher diese Priorisierung umsetzt. Ebenso erkennt der Fachmann beispielsweise, dass das computerimplementierte Verfahren in einer bevorzugten Ausführungsform die Verfahrensschritte umfasst, welche durch die Gerätesoftware auf dem Prozessor der Vernetzungsstation sowie durch die Mobile App auf den mobilen Endgeräten durchgeführt werden. Die computerimplementierten Schritte des Verfahrens erfolgen demnach bevorzugt auf dem Prozessor der Vernetzungsstation oder einem Prozessor der mobilen Endgeräte.

Im Folgenden soll die Erfindung an Hand von Beispielen näher erläutert werden, ohne auf diese beschränkt zu sein.

### Kurzbeschreibung der Figuren

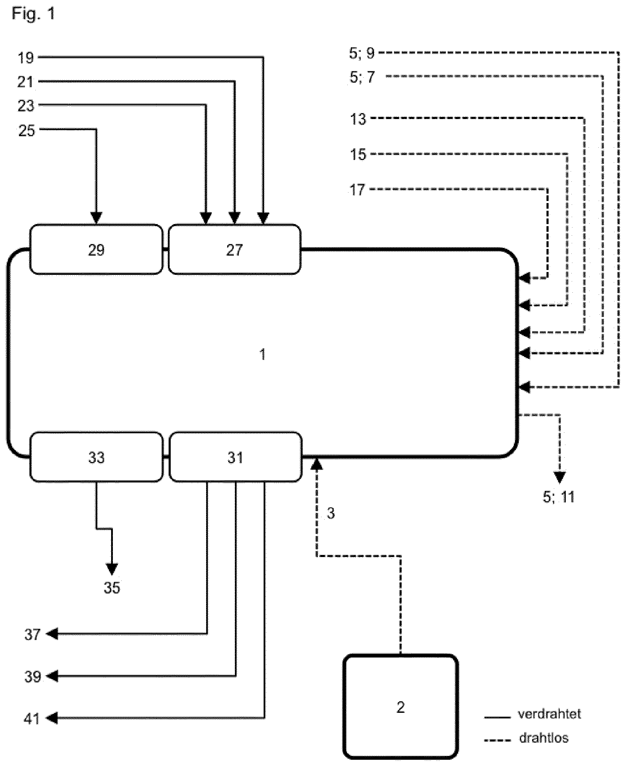

- Fig. 1: Schematische Abbildung einer bevorzugten Ausführungsform des erfindungsgemäßen Systems

### Detaillierte Beschreibung der Abbildung

Fig. 1 zeigt eine schematische Abbildung einer bevorzugten Ausführungsform des erfindungsgemäßen Systems, wobei sowohl die Vernetzungsstation 1 also auch das Bedienelement 2 dargestellt sind. An der Vernetzungsstation 1 liegt eine Vielzahl von Schnittstellen zur Kommunikation mit verschiedenen elektronischen Geräten oder der Fahrzeugelektronik vor. In der schematischen Abbildung ist die Kommunikation, welche die Schnittstellen zu den elektronischen Geräten oder der Fahrzeugelektronik ermöglichen, gestrichelt gezeigt, wenn es sich um eine drahtlose Kommunikation handelt und mit einer durchgezogenen Linie gekennzeichnet, wenn eine Kabelverbindung, also eine verdrahtete Verbindung vorliegt. Die Pfeile an den Kommunikationsmitteln zeigen die bevorzugte Richtung der Datenübertragung an.

Die Vernetzungsstation 1 umfasst mehrere Schnittstellen 5 zur drahtlosen Kommunikation und zum Austausch von Daten mit mobilen Endgeräten. Zu diesen Schnittstellen 5 gehört insbesondere eine Schnittstelle 9 für die mobilen Endgeräte zum Aufbau von Bluetooth-Verbindungen, wobei durch die Bluetooth-Verbindungen insbesondere eine Durchführung der Freisprechfunktion, der Sprachsteuerung oder von Musikstreaming erfolgen kann. Zur Priorisierung der Datenströme an die jeweiligen elektronischen Geräte kann bevorzugt eine Priorisierung der entsprechenden Bluetooth-Verbindungen erfolgen.

Weiterhin umfasst die bevorzugte Vernetzungsstation 1 eine Schnittstelle 7 mit den mobilen Endgeräten zur Konfiguration des Systems, wobei die Konfiguration insbesondere eine Einstellung der Funktionalität der Vernetzungsstation 1 meint. D.h. die Konfiguration stellt ein, auf welche Weise die Funktionalitäten der angeschlossenen Geräte angesteuert bzw. ausgewertet werden sollten und erlaubt eine Priorisierung der Datenströme. Die Konfiguration und Nutzereinstellung werden von den mobilen Endgeräten an die Gerätesoftware der Vernetzungsstation 1 übertragen.

Zudem umfasst die bevorzugte Vernetzungsstation 1 eine Schnittstelle 13 zur drahtlosen Kommunikation und zum Empfangen von OBD-Daten, wodurch der Betriebszustand des Fahrzeuges überwacht werden kann. Weiterhin erlaubt eine Schnittstelle 15 zur drahtlosen Kommunikation mit einem Reifendruckkontrollsystem die Anzeige und Überwachung des Reifendruckes.

Bevorzugt erfolgt die Ausgabe von Daten an die mobilen Endgeräte über eine Schnittstelle 11. Die Ausgabedaten an die mobilen Endgeräte umfassen insbesondere Videodaten der Kameras, welche im oder am Fahrzeug installiert sein können, Daten des Reifendruckkontrollsystems (RDKS/TMPS-Daten), sowie OBD-Daten. Diese Daten können von den mobilen Endgeräten ausgewertet und entsprechend der Nutzereinstellung angezeigt oder weitergeleitet werden.

Darüber hinaus ist die Vemetzungsstation 1 bevorzugt mithilfe einer drahtlosen Kommunikation mit dem Bedienelement 2 verbunden. In der bevorzugten Ausführungsform umfasst das Bedienelement 2 Eingabemöglichkeiten wie beispielsweise einen Druck- oder Drehknopf, welche eine Rufannahme bzw. einen Gesprächsstart, eine Rufablehnung bzw. eine Beendigung eines Telefongespräches bewirken sowie die Lautstärke regeln (laut/leise), die Sprachsteuerung initiieren sowie Mikrofonsignale übertragen. In der bevorzugten Ausführungsform umfasst das Bedienelement 2 selbst das Mikrofon, wodurch besonders qualitative Freisprech- und Sprachfunktionsergebnisse erzielt werden.

Bevorzugt erfolgt die Stromversorgung der Vernetzungsstation 1 über eine ISO Buchse 27. Hier erfolgt ein Eingang 19 der Stromversorgung. Ein weiterer Eingang zur ISO Buchse 27 betrifft das geschaltet PLUS 21 sowie Licht an/aus 23. An einem ISO Stecker 29 für die Lautsprecher wird bevorzugt ein Audio-Eingang 25 vom Audiosystem, bevorzugt einem Radio, angeschlossen. Dieser Audioeingang 25 umfasst in der bevorzugten Ausführungsform einen Hochpegeleingang sowie vier Audiokanäle. Weiterhin umfasst die bevorzugte Vernetzungsstation 1 einen ISO Stecker 31 zur verdrahteten Stromversorgung des Audiosystems 37, einem geschalteten PLUS zum Audiosystem 39 sowie ein Licht an/aus zum Audiosystem 41.

Auch kann mit der Vernetzungsstation 1 eine Ansteuerung der Lautsprecher erfolgen. Hierzu umfasst die Vernetzungsstation 1 eine ISO Buchse 33 für Lautsprecher. Von der ISO Buchse 33 erfolgt ein Audioausgang 35 zum Audiosystem. Es ist bevorzugt, dass der Audioausgang 3) einen Hochpegelausgang mit vier Audiokanäle umfasst, wobei weiterhin der Radioausgang durchgeschleift ist.

### Beispiele

Im Folgenden soll anhand einer beispielhaften Ausführungsform des Systems, dessen Steuerung und Anwendungsmöglichkeiten aufgezeigt werden. Es ist bevorzugt, dass die Software zur Steuerung des Systems aus zwei Softwarekomponenten besteht. Auf der Vernetzungsstation (1) wird eine Gerätesoftware installiert, welche die Funktion der einzelnen Baugruppen der elektronischen Geräte und die Kommunikation mit dem Bedienelement (2) koordiniert. Die zweite Softwarekomponente, die sog. Mobile App, ist auf den mobilen Endgeräten installiert und ermöglicht es dem Nutzer bevorzugt individuelle Einstellungen, z.B. eine Priorisierung der Audioquellen, vorzunehmen. Besonders bevorzugt werden diese mit jedem Verbindungsaufbau zur Vernetzungsstation (1) übertragen. Gleichzeitig wird durch die Mobile App die Wiedergabe der von der Vernetzungsstation (1) übermittelten Daten ermöglicht. Nur bei Nutzung der Freisprechfunktion ist dies bevorzugt nicht der Fall.

Bevorzugte Ausführungsformen und Anwendungsmöglichkeiten des Systems sowie das bevorzugte Zusammenspiel der Softwarekomponenten werden anhand der folgenden Beispiele illustriert:

### Beispiel 1: Herstellung der ersten Verbindung

Zur Herstellung der ersten Verbindung schaltet der Nutzer die Zündung des Fahrzeuges ein und die installierte Vernetzungsstation (1) bootet. Der Nutzer drückt einen Knopf am Bedienelement (2) 3x hintereinander und bringt diese so in den Verbindungsmodus für WLAN. Über die Fahrzeuglautsprecher wird der Netzwerkname angesagt und buchstabiert. Dieses Netzwerk wählt der Nutzer im Verbindungsdialog seines mobilen Endgerätes, beispielsweise seines Smartphones, aus. Nach nochmaligem Drücken des Knopfes des Bedienelementes (2) wird das Passwort angesagt und buchstabiert. Dieses gibt der Nutzer in seinem mobilen Endgerät ein und die Verbindung wird hergestellt. Die Mobile App wird automatisch gestartet. Unter den Einstellungen kann der Nutzer das WLAN-Passwort ändern und die Verbindungskonfiguration ersehen und konfigurieren. Die Verbindungskonfiguration können für die Bezeichnung (z.B. "Pauls Telefon"), die Freisprechfunktion (FSE) ja/nein, Musikstreaming ja/nein, Navigation ja/nein sowie die Priorität (1-3 bzw. 1-4), Verbindungscode) für die Bluetooth-Verbindungen aller verfügbaren Kanäle, bevorzugt mindestens 3-4 Kanäle, eingestellt werden.

### Beispiel 2: Losfahren

Der Nutzer steigt in sein Auto ein und fixiert sein Mobilgerät in einer dafür vorgesehenen Halterung oder lässt es in der Tasche. Er startet die Zündung und die Vernetzungsstation (1) bootet. Die Vernetzungsstation (1) und das mobile Endgerät verbinden sich via Bluetooth bzw. via WLAN. Die Mobile App startet auf dem mobilen Endgerät, z.B. dem Smartphone, übermittelt die Einstellungsdaten an die Verbindungsstation (1) und wird im Vordergrund des Displays des mobilen Endgerätes angezeigt.

### Beispiel 3: Navigieren

Der Nutzer hat das mobile Endgerät in der Halterung fixiert und startet auf seinem mobilen Endgerät eine Navigationsanwendung. Diese ist so konfiguriert, dass die Audio-Hinweise der Navigationsanwendung über Bluetooth ausgegeben werden. Somit werden Ansagen der App via der Vernetzungsstation (1) über das Audiosystem des Fahrzeugs wiedergegeben. Wird parallel ein Telefonat geführt oder Musik gestreamt, sollen Navigationsansagen priorisiert, d.h. über die Wiedergabe von Telefonaten oder Musik gelegt werden. Zu diesem Zweck erfolgt eine Priorisierung der Bluetooth-Kanäle.

### Beispiel 4: Telefonate annehmen und beenden

Die Zündung ist eingeschaltet, die Vernetzungsstation (1) gebootet und per Bluetooth mit dem Smartphone verbunden. Geht ein Anruf auf dem Smartphone ein, wird dieser am Smartphone oder am Knopf des Bedienelementes (2) angenommen und ggf. beendet. Die Lautstärke der Wiedergabe ist am Smartphone über herstellerseitige Buttons oder durch Drehen eines Knopfes am Bedienelement (2) einstellbar.

### Beispiel 5: Telefonate beginnen

Die Zündung ist eingeschaltet, die Vernetzungsstation (1) gebootet und per Bluetooth mit dem Smartphone verbunden. Der Nutzer kann an dem bevorzugt in der Halterung befindlichen Smartphone einen Kontakt auswählen und anrufen oder durch langes Drücken (3 sec.) die Sprachsteuerung des Smartphone aktivieren, um einen Kontakt per Sprachbefehl auszuwählen und anzurufen.

### Beispiel6: Reifendruckkontrolle

Der Nutzer hat den Reifendruck aller Reifen des Fahrzeuges (4 oder 5 mit dem Ersatzrad) auf den korrekten Stand gebracht. Nun ist dieser in der Vernetzungsstation (1) zu speichern. Dazu schaltet der Nutzer die Zündung ein, die Vernetzungsstation (1) bootet und die Mobile App startet auf den verbundenen mobilen Endgeräten. Nun kann der Nutzer am verbundenen mobilen Endgerät seiner Wahl die Vernetzungsstation (1) per Mobile App dazu auffordern, den Reifendruck aus den Sensoren auszulesen und abzuspeichern. Sollte der Reifendruck unter einen festgelegten Druck, z.B. einem Referenzdruck -10%, fallen, leitet die Vernetzungsstation (1) eine Warnung an die Mobile App weiter, welche diese optisch darstellt (Warnzeichen und Anzeige der Position des Reifens mit Druckverlust) und über das Audiosystem des Fahrzeugs eine sich wiederholende, verbale Warnung ausgibt. Die Warnungen können mittels Quittierung an der Mobile App abgeschaltet werden.

### Beispiel6: Rückfahrkamera

Die Rückfahrkamera ist per WLAN oder Bluetooth mit der Vernetzungsstation (1) verbunden. Die Anzahl und die Funktion (Rückfahrkamera, Frontkamera, Babykamera) lassen sich mittels der Mobilen App konfigurieren.

Übermittelt eine als Rückfahrkamera konfigurierte Kamera Videodaten werden diese automatisch im Vordergrund der per WLAN verbundenen mobilen Endgeräte angezeigt. Die Rückfahrkamera wird bevorzugt durch das Rückfahrlicht elektrisch versorgt, d.h. wenn der Rückwärtsgang eingelegt wird, liefert diese Videobilder.

Eine Frontkamera kann manuell in der Mobile App eingeschaltet werden, wobei wenige Klicks nötig sind. Daraufhin wird das aufgenommen Bild mit Hilfe der App im Display des mobilen Endgerätes angezeigt. Ein Ausschalten der Frontkamera erfolgt manuell oder nach einer Minute automatisch.

Eine Babykamera wird bevorzugt als Innenraumkamera installiert, welche z.B. zur Beobachtung eines Kindes in einem Reboard-Sitz auf der Rückbank ausgerichtet ist. Die Babykamera wird ebenfalls manuell in der Mobile App eingeschaltet. Daraufhin wird das aufgenommene Bild mit Hilfe der App im Display des mobilen Endgerätes angezeigt. Ein Ausschalten der Babykamera erfolgt manuell oder nach einer voreingestellten Zeit automatisch.

### Beispiel 6: OBD-Daten

OBD-Daten werden, falls gewünscht, von einem entsprechend ausgestatteten Diagnosestecker mittels WLAN an die Vernetzungsstation (1) übermittelt. Die Vernetzungsstation (1) übermittelt die Daten per WLAN an die Mobile App auf die verbundenen mobilen Endgeräte. Mit Hilfe der App werden die Daten gemäß der Konfiguration durch den Nutzer optisch auf dem Display des mobilen Endgerätes dargestellt.

### Beispiel 7: Konfiguration

Es ist besonders bevorzugt, dass der Nutzer in der Mobile App die möglichen Konfigurationen einsehen und ändern kann. Bevorzugt können folgende Konfigurationsmöglichkeiten ausgewählt und geändert werden:
a) Sprachen: Deutsch, Englisch, andere Sprachen, wobei ein Sprachsatz aus dem Internet herunter geladen werden kann
b) WLAN-Verbindungen: Netzwerkname, Passwort
c) Bluetooth-Verbindungen: Bezeichnung (z.B. "Pauls Telefon"), FSE ja/nein, Musikstreaming ja/nein, Navigation ja/nein, Priorität (1-3 bzw. 1-4), Verbindungscode
d) Nachlaufzeit der CCH-Blackbox: 0-120 Sekunden nach abschalten Zündung
e) Einstellung der Empfindlichkeit des Mikrofons im Bedienelement (2) der CCH-Blackbox: Stufen 1-10
f) Nutzung Sprachsteuerung: ja/nein
g) Reifendruckkontrolle: Ersatzrad mit Sensor ausgestattet ja/nein, Festlegung der Sensorpositionen (VR, VL, HR, HL), Auslesen & Speichern des Referenzdrucks
h) Rückfahrkamera: ja/nein
i) Automatische Anzeigedauer andere Kameras (xy Sekunden, manuell)
j) OBD-Stecker: ja/nein, Protokoll, welches aus Liste einer Liste auswählbar ist
k) Anzeige OBD-Daten: Anzeigeposition und Datum (z.B. Momentanverbrauch, Durchschnittsverbrauch, Tankinhalt, Reichweite, Öldruck, Öltemperatur, Kühlmitteltemperatur usw.)

Es wird darauf hingewiesen, dass verschiedene Alternativen zu den beschriebenen Ausführungsformen der Erfindung verwendet werden können, um die Erfindung auszuführen und zu der erfindungsgemäßen Lösung zu gelangen. Das erfindungsgemäße System beschränkt sich in seinen Ausführungen somit nicht auf die vorstehenden bevorzugten Ausführungsformen. Vielmehr ist eine Vielzahl von Ausgestaltungsvarianten denkbar, welche von der dargestellten Lösung abweichen können. Ziel der Ansprüche ist es, den Schutzumfang der Erfindung zu definieren. Der Schutzumfang der Ansprüche ist darauf gerichtet, das erfindungsgemäße System sowie äquivalente Ausführungsformen von diesem abzudecken.

### BEZUGSZEICHENLISTE

- 1: Vernetzungsstation
- 2: Bedienelement
- 3: Schnittstelle zur drahtlosen Kommunikation und zum Empfangen von Daten von dem Bedienelement
- 5: Schnittstelle zur drahtlosen Kommunikation und zum Austausch von Daten mit mobilen Endgeräten
- 7: Schnittstelle mit mobilen Endgeräten zur Konfiguration
- 9: Schnittstelle mit mobilen Endgeräten zum Aufbau einer Bluetooth Verbindung zur Durchführung von Freisprechfunktionen, Sprachsteuerung oder Musikstreaming
- 11: Schnittstelle zur Ausgabe von Daten an die mobilen Endgeräte insbesondere Videodaten der Kameras, Daten des Reifendruckkontrollsystems und OBD-Daten
- 13: Schnittstelle zur drahtlosen Kommunikation und zum Empfangen von OBD-Daten
- 15: Schnittstelle zur drahtlosen Kommunikation mit einem Reifendruckkontrollsystem
- 17: Schnittstelle zur drahtlosen Kommunikation und zum Austausch von Daten mit mindestens einer im oder am Fahrzeug installierten Kamera
- 19: Stromversorgung, Eingang
- 21: Geschaltetes PLUS, Eingang
- 23: Licht an/aus, Eingang
- 25: Audio-Eingang vom Audiosystem
- 27: ISO Buchse Stromversorgung
- 29: ISO Stecker Lautsprecher
- 31: ISO Stecker Stromversorgung
- 33: ISO Buchse Lautsprecher
- 35: Audio-Ausgang vom Audiosystem
- 37: Stromversorgung, Ausgang zum Audiosystem
- 39: geschaltetes PLUS zum Audiosystem
- 41: Licht an/aus zum Audiosystem

## Patentansprüche

1. System zur Einbindung von mobilen Endgeräten in einem Fahrzeug umfassend eine Vernetzungsstation (1) und ein Bedienelement (2)
**dadurch gekennzeichnet, dass**
die Vernetzungsstation (1) mindestens eine Schnittstelle (5) zur drahtlosen Kommunikation und zum Austausch von Daten für mindestens zwei mobile Endgeräte,
mindestens eine Schnittstelle (3) zur drahtlosen Kommunikation und zum Empfangen von Daten von dem Bedienelement (2),
mindestens eine Schnittstelle (13) zur drahtlosen Kommunikation und zum Empfangen von Daten peripherer Geräte des Nachrüstmarktes und mindestens eine Schnittstelle (29, 33) zur Kommunikation und zum Senden von Audiosignalen an ein Audiosystem des Fahrzeuges aufweist,
wobei die Vernetzungsstation (1) einen Prozessor umfasst, welcher konfiguriert ist, um empfangene Daten der mobilen Endgeräte, Daten des Bedienelements (2) und Daten peripherer Geräte des Nachrüstmarktes zu verarbeiten, zu bündeln und entsprechend einer vom Nutzer zuvor festgelegten Priorität an die mobilen Endgeräte und/oder an das Bedienelement zu senden,
sodass auf den mobilen Endgeräten die Daten peripherer Geräte des Nachrüstmarktes angezeigt werden können,
die Audiosignale, welche auf einem der mobilen Endgeräte erzeugt werden, durch das Audiosystem wiedergegeben werden können und
mindestens eine Funktion der mobilen Endgeräte mit Hilfe des Bedienelements (2) gesteuert werden kann.

2. System gemäß einem der vorherigen Ansprüche
**dadurch gekennzeichnet, dass**
das Bedienelement (2) ein Mikrofon aufweist, sodass das Bedienelement (2) zur Freisprechfunktion und/oder zur Sprachsteuerung genutzt werden kann.

3. System gemäß dem vorherigen Anspruch
**dadurch gekennzeichnet, dass**
die Sprachsteuerung zur Bedienung eines mobilen Endgerätes und/oder zur Bedienung des Audiosystems des Fahrzeuges genutzt werden kann.

4. System gemäß einem der vorherigen Ansprüche
**dadurch gekennzeichnet, dass**
auf einem mobilen Endgerät eine Navigationsanwendung installiert vorliegt.

5. System gemäß einem der vorherigen Ansprüche
**dadurch gekennzeichnet, dass**
das System eine Wiedergabe der Audiosignale gemäß ihrer Wichtigkeit für die Fahrzeugführung priorisiert, sodass bevorzugt die Wiedergabe von Audiosignalen einer Navigationsanwendung über die Wiedergabe von Audiosignalen eines Telefonates und/oder Musik priorisiert wird.

6. System gemäß einem der vorherigen Ansprüche
**dadurch gekennzeichnet, dass**
die Vernetzungsstation (1) mindestens eine Schnittstelle (17) zur drahtlosen Kommunikation und zum Austausch von Daten mit mindestens einer im oder am Fahrzeug installierten Kamera aufweist.

7. System gemäß einem der Ansprüche 6
**dadurch gekennzeichnet, dass**
die Vernetzungsstation (1) die von der mindestens einen Kamera empfangenen Daten zur Anzeige an die mobilen Endgeräte weitersenden kann.

8. System gemäß dem vorherigen Anspruch
**dadurch gekennzeichnet, dass**
die mindestens eine Kamera ausgewählt ist aus einer Gruppe umfassend Rückfahrkamera, Frontkamera, Innenraumkamera und/oder Babykamera.

9. System gemäß einem der Ansprüche **6 - 8**
**dadurch gekennzeichnet, dass**
die Aufnahmefunktion der Kamera von einem der mobilen Endgeräten steuerbar ist.

10. System gemäß einem der vorherigen Ansprüche
**dadurch gekennzeichnet, dass**
die drahtlose Kommunikation mit Hilfe von Bluetooth und/oder WLAN erfolgt.

11. System gemäß einem der vorherigen Ansprüche
**dadurch gekennzeichnet, dass**
die Daten peripherer Geräte des Nachrüstmarktes OBD-Daten sind und bevorzugt Daten über den Kilometerstand, den Tankinhalt, die Reichweite, den Durchschnittsverbrauch, den Öldruck, die Öltemperatur, den Kühlmittelstand, die Kühlmitteltemperatur, den Betriebszustand der Lambdasonde, den Zustand des Motors und/oder Fehlermeldungen umfassen.

12. System gemäß einem der vorherigen Ansprüche
**dadurch gekennzeichnet, dass**
die Vernetzungsstation (1) mindestens eine Schnittstelle (15) zur drahtlosen Kommunikation mit einem Reifendruckkontrollsystem aufweist.

13. System gemäß einem der vorherigen Ansprüche
**dadurch gekennzeichnet, dass**
die mobilen Endgeräte ausgewählt sind aus einer Gruppe umfassend Smartphones, Tablet-PCs, Notebooks und/oder Smartwatches.

14. System gemäß einem der vorherigen Ansprüche
**dadurch gekennzeichnet, dass**
auf der Vernetzungsstation (1) eine Gerätesoftware installiert vorliegt, durch welche eine Koordination der Funktionalität der Vernetzungsstation (1) erfolgt und auf den mobilen Endgeräten eine App installiert vorliegt, durch welche ein Verbindungsaufbau mit der Vernetzungsstation (1) erfolgt sowie eine Konfiguration der Funktionalität der Vernetzungsstation (1 ).

15. System gemäß dem vorherigen Anspruch
**dadurch gekennzeichnet, dass**
die App eine benutzerspezifische Konfiguration der Datenanzeige und/oder Priorisierung der Datenverarbeitung umfasst.
